# EUROPEAN PATENT APPLICATION

(11) **EP 4 324 891 A1**
(43) Date of publication of application: **21.02.2024**
(21) Application number: 22815862.2
(22) Date of filing: 19.05.2022
(51) Int. Cl.: C09D 11/30, B41J 2/01, B41M 5/00

(54) **ACTINIC-RAY-CURABLE INK COMPOSITION AND METHOD FOR PRODUCING PRINTED MATTER**

(30) Priority: 01.06.2021 JP 2021092432
(71) Applicant: DIC Corporation, Tokyo 174-8520 (JP)
(72) Inventor: SATAKE, Naoto, Kitaadachi-gun, Saitama 362-8577 (JP); FUJIMOTO, Satomi, Kitaadachi-gun, Saitama 362-8577 (JP); SAITO, Naohito, Kitaadachi-gun, Saitama 362-8577 (JP); FUKUI, Hiroyuki, Kitaadachi-gun, Saitama 362-8577 (JP)
(74) Representative: Kraus & Lederer PartGmbB
(86) International application number: PCT/JP2022/020759
(87) International publication number: WO 2022/255110

(57) **Abstract**

An object achieved by the present invention is to provide an active energy ray-curable ink composition that has flexibility (stretch resistance) at a low temperature while maintaining blocking resistance at room temperature, forms a printed material with excellent flexibility, and also has excellent durability against stacking of printed materials. According to the present invention, the active energy ray-curable ink composition is a composition including 35% to 50% by mass of a monomer A represented by General Formula (1) with respect to a total amount of the composition, a monomer B having a polymerizable unsaturated double bond and a structure represented by General Formula (2), and at least one polyfunctional polymerizable compound selected from urethane (meth)acrylate or amino (meth)acrylate.

## Description

### Technical Field

The present invention relates to an active energy ray-curable ink composition that can be used to produce various printed materials.

### Background Art

Printing performed using an ink jet recording device is a method of jetting an ink from a nozzle to print an image on a recording material without requiring a printing plate. With this method, printing can be satisfactorily performed not only on a paper base material but also on a base material with a curved surface or an uneven surface having an irregular shape, such as plastic or a metal, because the nozzle and the recording material do not come into contact with each other. Therefore, the ink jet printing method is expected to be widely used in a wide range of industrial fields.

Particularly, an active energy ray-curable ink jet ink that is cured by irradiation with active energy rays such as ultraviolet rays has been attracting attention as an environment-friendly technology because the content of volatile organic compounds (VOC) therein is small and the consumption of energy required to perform drying or the like in a printing step is low. For example, PTLs 1 to 3 disclose ink compositions as active energy ray-curable ink jet inks.

### Citation List

### Patent Literature

PTL 1: Japanese Unexamined Patent Application Publication No. 2012-140493
PTL 2: Japanese Unexamined Patent Application Publication No. 2015-224340
PTL 3: Japanese Unexamined Patent Application Publication No. 2019-002009

### Summary of Invention

### Technical Problem

When an ink composition is used to produce indoor and outdoor printed materials, the ink composition is required to have durability against folding and stacking of the printed materials. When the ink compositions disclosed in PTLs 1 to 3 are used, a coating film to be obtained can withstand use at warm regions, but there is still room for improvement in terms of flexibility at a low temperature.

A method of blending a polymerizable monomer having a low Tg with an ink composition is considered as a method of imparting flexibility to the coating film. However, in a case where the amount of the polymerizable monomer having a low Tg to be blended is simply increased, a problem of blocking that occurs when printed materials are stacked occurs, and thus both the flexibility at a low temperature and the blocking resistance are difficult to achieve.

As a result of intensive examination conducted by the present inventors, it was found that an active energy ray-curable ink composition exhibiting satisfactory curing properties and having excellent blocking resistance and flexibility, specifically, excellent stretch resistance (followability to a base material) at a low temperature can be obtained by selecting a specific polymerizable monomer, setting the blending amount of the polymerizable monomer to be in a specific range, and selecting a specific polyfunctional polymer. Further, it was found that the coating film formed of such a composition has excellent hardness and excellent adhesiveness to a recording medium.

The object of the present invention is to provide an active energy ray-curable ink composition that has flexibility (stretch resistance) at a low temperature while maintaining the blocking resistance at room temperature, forms a printed material with excellent flexibility, and also has excellent durability against stacking of printed materials.

### Solution to Problem

The present invention provides the following aspects.
[1] There is provided an active energy ray-curable ink composition including: 35% to 50% by mass of a monomer A represented by General Formula (1) with respect to a total amount of the composition; 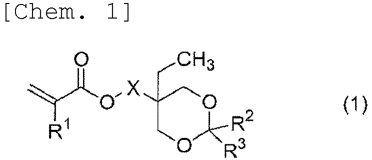
   (in the formula, R¹, R², and R³ each independently represent a hydrogen atom or an alkyl group, and X represents a single bond or a divalent linking group)
   a monomer B having a polymerizable unsaturated double bond and a structure represented by General Formula (2); and 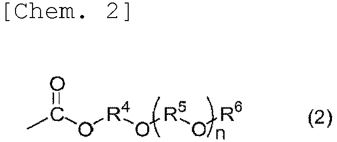
   (in the formula, R⁴ represents an alkylene group having 1 or more carbon atoms, R⁵ represents an alkylene group having 1 or more carbon atoms, which may be the same as or different from R⁴, R⁶ represents a hydrogen atom or an alkyl group, and n represents an integer of 0 or greater)
   a polyfunctional polymerizable compound selected from at least one of urethane (meth)acrylate or amino (meth)acrylate.
[2] The active energy ray-curable ink composition according to [1], in which the monomer A is cyclic trimethylolpropane formal (meth)acrylate.
[3] The active energy ray-curable ink composition according to [1] or [2], in which a content of the monomer B is in a range of 5% to 15% by mass with respect to the total amount of the composition.
[4] The active energy ray-curable ink composition according to any one of [1] to [3], in which the monomer B is 2-(2-ethoxyethoxy)ethyl (meth)acrylate.
[5] The active energy ray-curable ink composition according to any one of [1] to [4], in which the polyfunctional polymerizable compound has a molecular weight of 2000 to 20000.
[6] The active energy ray-curable ink composition according to any one of [1] to [5], in which the active energy ray-curable ink composition contains urethane (meth)acrylate and amino (meth)acrylate as the polyfunctional polymerizable compound.
[7] The active energy ray-curable ink composition according to any one of [1] to [6], in which a content of the polyfunctional polymerizable compound is in a range of 2% to 12% by mass with respect to the total amount of the composition.
[8] The active energy ray-curable ink composition according to any one of [1] to [7], in which the active energy ray-curable ink composition has a pencil hardness of F or higher when cured.
[9] The active energy ray-curable ink composition according to any one of [1] to [8], in which the active energy ray-curable ink composition is an ultraviolet-curable ink jet ink composition.
[10] There is provided a method of producing a printed material, including: a step of jetting the active energy ray-curable ink composition according to any one of [1] to [9] to a recording medium and irradiating the composition with active energy rays to cure the composition. Advantageous Effects of Invention

According to the present invention, it is possible to provide an active energy ray-curable ink composition that has flexibility at a low temperature, specifically stretch resistance of a coating film at around 0°C while maintaining the blocking resistance at room temperature, forms a printed material with excellent flexibility, and also has excellent durability against stacking of printed materials.

### Brief Description of Drawing

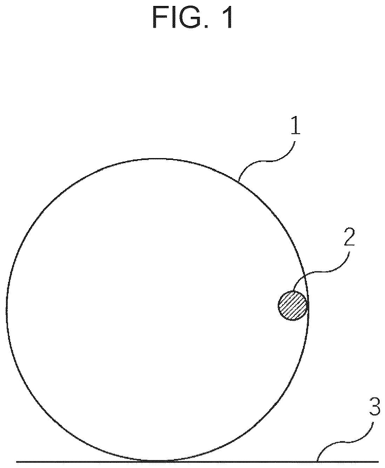

[Fig. 1] Fig. 1 is a conceptual view showing a method of evaluating tackiness on a surface of a coating film.

### Description of Embodiments

According to the present invention, an active energy ray-curable ink composition (hereinafter, simply referred to as "present ink composition") is a composition containing 35% to 50% by mass of a monomer A represented by General Formula (1) with respect to the total amount of the composition (hereinafter, simply referred to as "monomer A"), 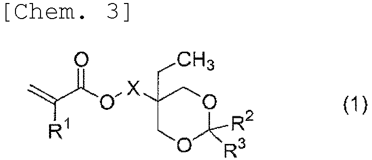
(in the formula, R¹, R², and R³ each independently represent a hydrogen atom or an alkyl group, and X represents a single bond or a divalent linking group)
a monomer B having a polymerizable unsaturated double bond and a structure represented by General Formula (2) (hereinafter, simply referred to as "monomer B"), and 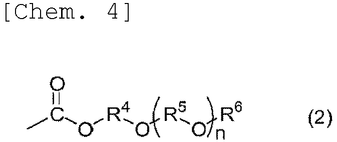
(in the formula, R⁴ represents an alkylene group having 1 or more carbon atoms, R⁵ represents an alkylene group having 1 or more carbon atoms, which may be the same as or different from R⁴, R⁶ represents a hydrogen atom or an alkyl group, and n represents an integer of 0 or greater)
a polyfunctional polymerizable compound selected from at least one of urethane (meth)acrylate or amino (meth)acrylate (hereinafter, simply referred to as "polyfunctional polymerizable compound").

In the present specification, the term "(meth)acrylate" denotes any one or both of an acrylate and a methacrylate. The term "(meth)acryl" denotes any one or both of acryl and methacryl. The term "(meth)acryloyloxy group" denotes any one or both of an acryloyloxy group and a methacryloyloxy group.

Hereinafter, the configurations of the present ink composition will be described. Further, the present invention is not limited to such configurations of embodiments, and other optional configurations may be added or the configurations may be replaced with optional configurations exhibiting the same functions as the functions of the configurations.

The present ink composition contains a monomer A. The monomer A is a compound represented by General Formula (1). In General Formula (1), examples of the alkyl group represented by R¹, R², and R³ include a methyl group, an ethyl group, and a propyl group.

It is preferable that R¹ represent a hydrogen atom or a methyl group. It is preferable that R² and R³ each independently represent a hydrogen atom, a methyl group, or an ethyl group and more preferable that both R² and R³ represent a hydrogen atom from the viewpoint of exhibiting flexibility at a low temperature, specifically, stretch resistance at around 0°C while maintaining blocking resistance of a coating film formed of the present ink composition at room temperature.

As the divalent linking group represented by X, a divalent hydrocarbon group or a divalent group obtained by combining a hydrocarbon group and an ether bond is preferable, a divalent hydrocarbon group having 1 to 20 carbon atoms is more preferable, and a divalent hydrocarbon group having 1 to 8 carbon atoms, such as a methylene group or an ethylene group, is still more preferable.

Specific examples of the monomer A include the following compounds.

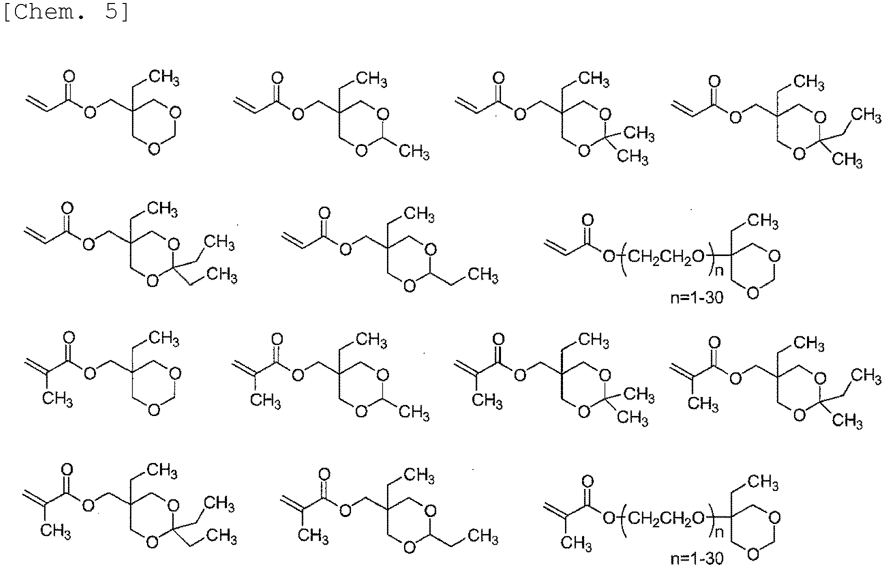

Among these, it is preferable to use cyclic trimethylolpropane formal (meth)acrylate and more preferable to use cyclic trimethylolpropane formal acrylate as the monomer A.

The content of the monomer A is in a range of 35% to 50% by mass, preferably in a range of 35% to 48% by mass, and more preferably in a range of 35% to 45% by mass with respect to the total amount of the present ink composition. When the content of the monomer A in the present ink composition is in the above-described ranges, the flexibility at a low temperature, specifically, the stretch resistance at around 0°C is improved while the blocking resistance of a coating film formed of the present ink composition at room temperature is maintained.

The present ink composition contains a monomer B. The monomer B is a compound having a polymerizable unsaturated double bond and a structure represented by General Formula (2). In General Formula (2), examples of the alkylene group having 1 or more carbon atoms as R⁴ and R⁵ include a methylene group, an ethylene group, a propylene group, an isopropylene group, a butylene group, and an isobutylene group. R⁴ and R⁵ may be the same as or different from each other. Among the examples, it is more preferable that both R⁴ and R⁵ represent an ethylene group from the viewpoint of obtaining the present ink composition having flexibility (stretch resistance) at a low temperature while maintaining blocking resistance at room temperature.

Examples of the alkyl group represented by R⁶ in General Formula (2) include a methyl group, an ethyl group, a propyl group, and a butyl group. n represents preferably an integer of 0 to 20 and more preferably an integer of 0 to 3.

Specific examples of the monomer B include methoxyethyl (meth)acrylate, ethoxyethyl (meth)acrylate, butoxyethyl (meth)acrylate, ethoxyethoxyethyl (meth)acrylate, 2-hydroxyethyl (meth)acrylate, 2-hydroxypropyl (meth)acrylate, 2-hydroxybutyl (meth)acrylate, 2-ethyl hexyl diglycol (meth)acrylate, diethyl glycol mono(meth)acrylate, diethylene glycol monobutyl ether (meth)acrylate, methoxy diethylene glycol (meth)acrylate, methoxy triethylene glycol (meth)acrylate, methoxy polyethylene glycol (meth)acrylate, and methoxy propylene glycol (meth)acrylate. Among these, from the viewpoint of improving the flexibility at a low temperature, specifically, the stretch resistance at around 0°C while maintaining the blocking resistance of a coating film formed of the present ink composition at room temperature, it is preferable to use 2-(2-ethoxyethoxy)ethyl (meth)acrylate as the monomer B.

The content of the monomer B is preferably in a range of 5% to 15% by mass and more preferably in a range of 8% to 14% by mass with respect to the total amount of the present ink composition from the viewpoint of obtaining the present ink composition having flexibility (stretch resistance) at a low temperature while maintaining blocking resistance at room temperature.

The present ink composition contains a polyfunctional polymerizable compound selected from at least one of urethane (meth)acrylate or amino (meth)acrylate.

Such a polyfunctional polymerizable compound may be any one of a monomer, an oligomer, or a polymer. In the present specification, "monomer" denotes a compound having a molecular weight (weight-average molecular weight in terms of molecular weight distribution) of 1000 or less. The molecular weight (weight-average molecular weight in terms of molecular weight distribution) of the monomer is in a range of 50 to 1000. The term "oligomer" typically denotes a polymer having constitutional units formed of a finite number (typically in a range of 5 to 100) of monomers and having a weight-average molecular weight of greater than 1000 and less than 30000. The term "polymer" denotes a polymer having a weight-average molecular weight of 30000 or greater. The weight-average molecular weight is determined as a value in terms of standard polystyrene measured by gel permeation chromatography (GPC).

The polyfunctional polymerizable compound contained in the present ink composition is preferably an oligomer having a weight molecular weight of 1000 to 30000 and more preferably an oligomer having a weight molecular weight of 2000 to 20000.

When urethane (meth)acrylate is used as the polyfunctional polymerizable compound, the weight-average molecular weight thereof is preferably in a range of 1000 to 30000 and more preferably in a range of 2000 to 20000.

When amino (meth)acrylate is used as the polyfunctional polymerizable compound, the number average molecular weight thereof is preferably in a range of 2000 to 20000, more preferably in a range of 2000 to 10000, and still more preferably in a range of 2000 to 5000.

Examples of the urethane (meth)acrylate include aliphatic urethane (meth)acrylate and aromatic urethane (meth)acrylate.

A commercially available product can be used as the urethane (meth)acrylate, and examples thereof include U-2PPA, U-4HA, U-6HA, U-6LPA, U-15HA, U-324A, UA-122P, UA5201, and UA-512 (all manufactured by Shin-Nakamura Chemical Co., Ltd.), CN965NS, CN964A85, CN964, CN959, CN962, CN963J85, CN965, CN982B88, CN981, CN983, CN996, CN9002, CN9007, CN9009, CN9010, CN9011, CN9178, CN9788, and CN9893 (all manufactured by Sartomer), and EBECRYL 230, EBECRYL 270, EBECRYL 8402, EBECRYL 8804, EBECRYL 8807, EBECRYL 9270, and KRM 8191 (all manufactured by Daicel-Allnex Ltd.).

The amino (meth)acrylate is an amine-modified (meth)acrylate containing an amino group. A commercially available product can be used as the amino (meth)acrylate, and examples thereof include EBECRYL 7100 and EBECRYL 80 (both manufactured by Daicel-Allnex Ltd.).

From the viewpoint of achieving both the blocking resistance at room temperature and the flexibility (stretch resistance) at a low temperature, the content of the polyfunctional polymerizable compound is preferably in a range of 2% to 12% by mass and more preferably in a range of 4% to 8% by mass with respect to the total amount of the present ink composition.

The polyfunctional polymerizable compound may be used alone or in combination of two or more kinds thereof. Particularly, it is preferable that the present ink composition contains urethane (meth)acrylate or both urethane (meth)acrylate and amino (meth)acrylate as the polyfunctional polymerizable compound. That is, a suitable aspect of the present ink composition is that the present ink composition contains both urethane (meth)acrylate and amino (meth)acrylate as the polyfunctional polymerizable compound, and when the present ink composition contains amino (meth)acrylate, the hardness of a coating film to be formed is improved even in a case where the content of a photopolymerization initiator described below in the present ink composition is reduced.

In this case, the content of the urethane (meth)acrylate is preferably in a range of 2% to 6% by mass and more preferably in a range of 2.5% to 5% by mass with respect to the total amount of the present ink composition. Meanwhile, the content of the amino acrylate is preferably in a range of 0% to 3% by mass and more preferably in a range of 1% to 3% by mass with respect to the total amount of the present ink composition.

The present ink composition may contain other polymerizable compounds in addition to the monomer A, the monomer B, and the polyfunctional polymerizable compound. As such other polymerizable compounds, compounds which have a polymerizable double bond and are in a liquid state at 25°C are preferable.

The viscosity of the other polymerizable compounds is preferably 1000 mPa·s or less and more preferably 300 mPa·s or less. The viscosity thereof is preferably 1 mPa·s or greater and more preferably 10 mPa·s or greater.

The molecular weight of the other polymerizable compounds is not particularly limited, but is preferably in a range of 60 to 2000 and more preferably in a range of 100 to 1000.

Examples of the other polymerizable compounds include a compound having a heterocyclic structure, a monofunctional (meth)acrylate containing a chain-like or cyclic aliphatic group, a monofunctional (meth)acrylate containing an aromatic hydrocarbon group, a polyfunctional (meth)acrylate, and a vinyl ether compound.

Examples of the compound having a heterocyclic structure include N-vinylcaprolactam, N-vinylpyrrolidone, (meth)acryloylmorpholine, N-(meth)acryloyloxyethylhexahydrophthalimide, and tetrahydrofurfuryl (meth)acrylate. Among these, N-vinylcaprolactam is preferable from the viewpoints of excellent safety, versatility, availability at relatively low cast, and obtaining satisfactory curing properties and adhesiveness of a coating film after curing the composition to a recording medium.

Examples of the monofunctional (meth)acrylate containing a chain-like or cyclic aliphatic group include isoamyl (meth)acrylate, stearyl (meth)acrylate, lauryl (meth)acrylate, octyl (meth)acrylate, isooctyl (meth)acrylate, decyl (meth)acrylate, isomyristyl (meth)acrylate, isostearyl (meth)acrylate, tricyclodecane dimethanol di(meth)acrylate, adamantyl (meth)acrylate, cyclohexane dimethanol mono(meth)acrylate, cyclohexane dimethanol di(meth)acrylate, trimethyl cyclohexyl (meth)acrylate, isobornyl (meth)acrylate, t-butyl cyclohexyl (meth)acrylate, dicyclopentanyl (meth)acrylate, and dicyclopentenyloxyethyl (meth)acrylate.

Examples of the monofunctional (meth)acrylate containing an aromatic hydrocarbon group include 2-phenoxyethyl (meth)acrylate and benzyl (meth)acrylate. Among these, 2-phenoxyethyl (meth)acrylate is preferable, and 2-phenoxyethyl acrylate is more preferable from the viewpoints of ink jet jettability, adhesiveness of a coating film obtained by curing the composition, and the flexibility (stretch resistance) at a low temperature.

Examples of the polyfunctional (meth)acrylate include glycol (meth)acrylate such as ethylene glycol di(meth)acrylate, 1,4-butanediol di(meth)acrylate, neopentyl glycol di(meth)acrylate, 1,6-hexanediol di(meth)acrylate, 1,9-nonanediol di(meth)acrylate, ethoxylated (2) neopentyl glycol di(meth)acrylate [compound obtained by diacrylating neopentyl glycol ethylene oxide 2-mole adduct], or propoxylated (2) neopentyl glycol di(meth)acrylate [compound obtained by diacrylating neopentyl glycol propylene oxide 2-mole adduct],
alkylene glycol (meth)acrylate such as diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, tetrapropylene glycol di(meth)acrylate, polypropylene glycol di(meth)acrylate, or bis(4-acryloxypolyethoxyphenyl)propane,
Pentaerythritol tri(meth)acrylate, pentaerythritol tetra(meth)acrylate, dipentaerythritol tetra(meth)acrylate, trimethylolpropane tri(meth)acrylate, ethylene oxide-modified trimethylolpropane tri(meth)acrylate, tetramethylolmethane tetra(meth)acrylate, tetramethylolmethane tri(meth)acrylate, dimethylol tricyclodecane di(meth)acrylate, modified glycerin tri(meth)acrylate, modified bisphenol A di(meth)acrylate, propylene oxide (PO) adduct di(meth)acrylate of bisphenol A, ethylene oxide (EO) adduct di(meth)acrylate of bisphenol A, dipentaerythritol hexa(meth)acrylate, and caprolactone-modified dipentaerythritol hexa(meth)acrylate.

Examples of the vinyl ether compound include a divinyl ether compound or a trivinyl ether compound such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinyl ether, or trimethylolpropane trivinyl ether, and a monovinyl ether compound such as ethylene glycol monovinyl ether, triethylene glycol monovinyl ether, hydroxyethyl monovinyl ether, ethyl vinyl ether, n-butyl vinyl ether, isobutyl vinyl ether, octadecyl vinyl ether, cyclohexyl vinyl ether, hydroxy butyl vinyl ether, 2-ethyl hexyl vinyl ether, hydroxy nonyl monovinyl ether, cyclohexane dimethanol monovinyl ether, n-propyl vinyl ether, isopropyl vinyl ether, isopropenyl vinyl ether, dodecyl vinyl ether, or diethylene glycol monovinyl ether.

When the present ink composition further contains other polymerizable compounds, the other polymerizable compounds may be used alone or in combination of two or more kinds thereof. Further, the content of the other polymerizable compounds is in a range of 15% to 60% by mass, preferably in a range of 20% to 50% by mass, and more preferably in a range of 25% to 45% by mass with respect to the total amount of the present ink composition from the viewpoint of obtaining the present ink composition.

The present ink composition may further contain a photopolymerization initiator in addition to the monomer A, the monomer B, and the polyfunctional polymerizable compound described above.

Examples of the photopolymerization initiator include benzoin isobutyl ether, 2,4-diethylthioxanthone [also referred to as 2,4-diethylthioxanthen-9-one], 2-isopropylthioxanthone, methyl benzoyl formate, 2,4,6-trimethyl benzoyl diphenyl phosphine oxide, phenylbis(2,4,6-trimethylbenzoyl)phosphine oxide, 6-trimethyl benzoyl diphenyl phosphine oxide, ethyl phenyl(2,4,6-trimethylbenzoyl)phosphinate, 2-benzyl-2-dimethylamino-1-(4-morpholinophenyl)-butane-1-one, bis(2,6-dimethoxybenzoyl)-2,4,4-trimethyl pentyl phosphine oxide, 1-hydroxycyclohexyl phenyl ketone, benzoin ethyl ether, benzyl dimethyl ketal, 2-hydroxy-2-methyl-1-phenylpropan-1-one, 1-(4-isopropylphenyl)-2-hydroxy-2-methylpropan-1-one, 2-methyl-1-(4-methylthiophenyl)-2-morpholinopropan-1-one, benzophenone, 4-phenylbenzophenone, isophthalphenone, and 4-benzoyl-4'-methyldiphenyl sulfide. Among these, an acylphosphine oxide-based photopolymerization initiator is preferable.

Further, when an ultraviolet light emitting diode (UV-LED) light source is used as a light source of active energy rays, preferred examples of the photopolymerization initiator compatible with the wavelength of light emitted from the UV-LED light source include 2-benzyl-2-dimethylamino-1-(4-morpholinophenyl)-butan-1-one, 2-(dimethylamino)-2-[(4-methylphenyl)methyl]-1-(4-morpholinophenyl)-butan-1-one), phenylbis(2,4,6-trimethylbenzoyl)phosphine oxide, 2,4,6-trimethylbenzoyl diphenyl phosphine oxide, ethyl phenyl(2,4,6-trimethylbenzoyl)phosphinate, 2,4-diethylthioxanthone, 2,4-diethylthioxanthen-9-one, 2-isopropylthioxanthone, and 1-{4-[(4-benzoylphenyl)sulfanyl]phenyl}-2-methyl-2-[(4-methylphenyl)sulfonyl]propan-1-one.

It is preferable that the photopolymerization initiator is used in combination with a sensitizer. Examples of the sensitizer include amines that do not have reactivity with the monomer A, the monomer B, and the polyfunctional polymerizable compound, such as trimethylamine, methyldimethanolamine, triethanolamine, p-diethylaminoacetophenone, ethyl p-dimethylaminobenzoate, isoamyl p-dimethylaminobenzoate, N,N-dimethylbenzylamine, and 4,4'-bis(diethylamino)benzophenone.

When the present ink composition further contains a photopolymerization initiator, the content of the photopolymerization initiator (in a case where the photopolymerization initiator is used in combination with a sensitizer, the total amount of the photopolymerization initiator and the sensitizer) is preferably in a range of 2% to 15% by mass and more preferably in a range of 2.5% to 10% by mass with respect to the total amount of the present ink composition from the viewpoint of suppressing coloring of a coating film to be formed.

The present ink composition can be used to contain a colorant in addition to the monomer A, the monomer B, and the polyfunctional polymerizable compound described above.

Examples of the colorant include a pigment and a dye. Examples of the pigment include a phthalocyanine pigment used in a cyan ink, a quinacridone-based pigment used in a magenta ink, an azo pigment used in a yellow ink, carbon black used in a black pigment, and a white pigment that can be used in a white ink.

Examples of the phthalocyanine pigment used in a cyan ink include C.I. Pigment Blue 1, 2, 3, 15:3, 15:4, 16:6, 16, 17:1, 75, and 79.

Examples of the quinacridone-based pigment used in a magenta ink include C.I. Pigment Red 122, C.I. Pigment Red 202, C.I. Pigment Red 209, and C.I. Pigment Violet 19.

Examples of the azo pigment used in a yellow ink include monoazo and diazo pigments such as C.I. Pigment Yellow 120, 151, 154, 175, 180, 181, 1, 65, 73, 74, 116, 12, 13, 17, 81, 83, 150, 155, 214, and 128.

Examples of the carbon black used in a black ink include No. 2300, No. 900, MCF88, No. 33, No. 40, No. 45, No. 52, MA7, MA8, MA11, MA100, and No. 2200B (all manufactured by Mitsubishi Chemical Corporation), Raven 5750, Raven 5250, Raven 5000, Raven 3500, Raven 1255, and Raven 700 (all manufactured by Columbia Carbon, Inc.), Regal 400R, Regal 330R, Regal 660R, Mogul L, Mogul 700, Monarch 800, Monarch 880, Monarch 900, Monarch 1000, Monarch 1100, Monarch 1300, and Monarch 1400 (all manufactured by Cabot Corporation), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all manufactured by Degussa-Huls AG).

The volume average particle diameter of the various pigments is preferably in a range of 10 to 300 nm and more preferably in a range of 50 to 200 nm.

As the white pigment that can be used in a white ink, known inorganic white pigments can be used without particular limitation. Examples of the inorganic white pigment include a sulfate or a carbonate of alkaline earth metal, silicas such as fine powder silicic acid or a synthetic silicate, calcium silicate, alumina, an alumina hydrate, titanium oxide, zinc oxide, talc, and clay. Further, surfaces of silicas and the like may be subjected to surface treatments using various surface treatment methods.

When titanium oxide is used as the white pigment, the volume average particle diameter thereof is preferably in a range of 100 to 500 nm and more preferably in a range of 150 nm to 400 nm from the viewpoint of obtaining an ink with more excellent jetting stability and high color developability of a printed image.

From the viewpoint of sufficiently obtaining the image density and light resistance of a printed image, the content of various pigments described above is preferably in a range of 1% to 20% by mass, more preferably in a range of 1% to 10% by mass, and still more preferably in a range of 1% to 5% by mass with respect to the total amount of the present ink composition. Further, it is preferable that the pigment concentration of the magenta ink be set to be higher than the pigment concentration of other color inks. Specifically, the pigment concentration of the magenta ink is set to preferably 1.2 times or greater and more preferably in a range of 1.2 to 4 times the pigment concentration of other color inks.

The various pigments described above may be used in combination with a pigment dispersant, a pigment derivative (synergist), or the like for the purpose of enhancing dispersion stability in the present ink composition, specifically, dispersion stability in the monomer A, the monomer B, the polyfunctional polymerizable compound, and the like. Examples of the pigment dispersant include AJISPER (registered trademark) PB821, AJISPER PB822, and AJISPER PB824 (all manufactured by Ajinomoto Fine-Techno Co., Inc.), Solsperse (registered trademark) 24000GR, Solsperse 32000, Solsperse 33000, and Solsperse 39000 (manufactured by The Lubrizol Corporation), DISPARLON DA-703-50 (manufactured by Kusumoto Chemicals, Ltd.), and EFKA (registered trademark) PX4701 and EFKA PX4703 (both manufactured by BASF SE). Further, examples of the pigment derivative include a sulfonic acid derivative of a pigment.

The amount of the pigment dispersant to be used is preferably in a range of 10% to 100% by mass and more preferably in a range of 20% to 60% by mass with respect to the amount of the pigment from the viewpoint of obtaining an ink with more excellent jetting stability and pigment dispersibility.

From the viewpoint of improving the dispersibility and handleability, the present ink composition may further contain a surfactant as a dispersant. Examples of the surfactant include anionic surfactants such as dialkyl sulfosuccinates, alkyl naphthalene sulfonates, and fatty acid salts, nonionic surfactants such as polyoxyethylene alkyl ethers, polyoxyethylene alkyl allyl ethers, acetylene glycols, and polyoxyethylene-polyoxypropylene block copolymers, and cationic surfactants such as alkylamine salts and quaternary ammonium salts.

As the surfactant, a compound having a silicone chain, a silicone-based surfactant having a polyether chain in a side chain or at a terminal and a polysiloxane structure in the main chain and preferably a hydrophobic organic fluorocompound such as a fluorine-based surfactant having a perfluoroalkyl chain, an oily fluorine-based compound (such as fluorine oil), or a solid-state fluorine compound resin (such as a tetrafluoroethylene resin) may be used.

Examples of the silicone-based surfactant and the fluorine-based surfactant include BYK 306, 307, 310, 313, 320, 331, 333, 350, 377, and 378 (all manufactured by BYK-Chemie GmbH), silicone in which both terminals of KF Series, X-22 Series, and X-21 Series (manufactured by Shin-Etsu Chemical Co., Ltd.) are substituted with organic groups, silicone in which one terminal thereof is substituted with an organic group, silicone in which side chains and both terminals thereof are substituted with organic groups, and silicone in which side chains are substituted with organic groups, and MEGAFACE F Series (manufactured by DIC Corporation).

From the viewpoint of ensuring the jetting stability and setting the surface tension to be in a desired range, the content of the surfactant in the present ink composition is preferably in a range of 0.05% to 1.0% by mass and more preferably in a range of 0.1% to 0.8% by mass with respect to the total amount of the present ink composition.

The present ink composition may further contain, in addition to the components described above, a polymerization inhibitor such as hydroquinone, di-t-butylhydroquinone, P-methoxyphenol, benzoquinone, butylhydroxytoluene, a nitrosamine salt, a hindered amine-based compound, or 2,2,6,6-tetramethylpiperidine 1-oxyl (TEMPO) as necessary. When the present ink composition contains a polymerization inhibitor, the amount thereof is preferably in a range of 0.01% to 2% by mass with respect to the total amount of the present ink composition.

The present ink composition may further contain a fluorescent agent (compound having a property of absorbing light energy such as radiation or ultraviolet rays, changing the light energy into light having other wavelengths, and radiating the light) such as a diaminostilbene derivative, anthracene, sodium salicylate, a diaminostilbene disulfonic acid derivative, an imidazole derivative, a coumarin derivative, a pyrazoline derivative, a decalylamine derivative, ZnCdS:Ag, ZnS:Pb, or ZnS:Cu.

Among these, when the present ink composition contains a white pigment, it is preferable that the present ink composition contain a colorless or weakly colored compound, which is typically referred to as a fluorescent brightening agent, capable of absorbing light having a wavelength of around 300 to 450 nm that is ultraviolet light to short-wavelength visible light and capable of emitting fluorescence having a wavelength of around 400 to 500 nm. When the present ink composition contains a fluorescent brightening agent, the whiteness is improved by suppressing yellowing of a cured product so that the curing properties can be further enhanced in some cases.

Examples of the fluorescent brightening agent include a naphthalene benzoxazoyl derivative such as 1,4-bis-(2-benzoxazoyl)naphthalene, a thiophene benzoxazoyl derivative such as 2,5-thiophene diylbis(5-tert-butyl-1,3-benzoxazole), a stilbene benzoxazoyl derivative, a coumarin derivative, a styrene biphenyl derivative, a pyrazolone derivative, a stilbene derivative, a styryl derivative of benzene and biphenyl, a bis(benzazole-2-yl) derivative, carbostyril, naphthalimide, a derivative of dibenzothiophene-5,5'-dioxide, a pyrene derivative, and pyridotriazole.

Examples of the fluorescent brightening agent include TELALUX Series (manufactured by Clariant Japan K.K.) and Tinopal Series (manufactured by BASF SE).

When the present ink composition further contains a fluorescent brightening agent, the content thereof is preferably in a range of 0.05% to 1.0% by mass and more preferably in a range of 0.07% to 0.7% by mass with respect to the total amount of the present ink composition.

The present ink composition may contain additives such as an ultraviolet absorbing agent, an antioxidant, a surface tension adjuster, an anti-fading agent, and conductive salts. Further, from the viewpoint of further improving the adhesiveness to a base material such as a plastic base material, the present ink composition may contain a non-reactive resin such as an acrylic resin, an epoxy resin, a terpene phenol resin, or rosin ester.

The viscosity of the present ink composition at 25°C is preferably in a range of 3 to 30 mPa·s and more preferably in a range of 5 to 20 mPa·s from the viewpoint of enhancing the ink jet jetting stability.

The present ink composition can be produced by dispersing a mixture, to which the monomer A, the monomer B, and the polyfunctional polymerizable compound described above, and as necessary, other polymerizable compounds, a colorant such as a pigment, and a pigment dispersant are added, using a typical disperser such as a bead mill, adding a photopolymerization initiator thereto, and adding optionally adding components such as a polymerization inhibitor, a sensitizer, and a surface tension adjuster thereto as necessary, and stirring and dissolving the mixture.

The present ink composition can be produced by producing a pigment dispersion (mill base) with a high concentration in advance, which contains a pigment, a pigment dispersant, a resin, or the like, using a typical disperser such as a bead mill, supplying the monomer A, the monomer B, the polyfunctional polymerizable compound, the photopolymerization initiator, and the optionally adding components described above thereto, and stirring and mixing the mixture.

Here, as the disperser, various known and commonly used dispersers such as an ultrasonic homogenizer, a high-pressure homogenizer, a paint shaker, a ball mill, a roll mill, a sand mill, a sand grinder, a dyno-mill, DISPERMAT, an SC mill, and a nanomizer can be used in addition to the bead mill.

The present ink composition is cured by being irradiated with light such as active energy rays and preferably ultraviolet rays. As a light source of ultraviolet rays or the like, a light source used for an ink for active energy ray-curable ink jet recording, such as a metal halide lamp, a xenon lamp, a carbon arc lamp, a chemical lamp, a low-pressure mercury lamp, a high-pressure mercury lamp, or a UV-LED lamp can be typically used.

From the viewpoints of excellent curing properties and hardness, the pencil hardness of the cured present ink composition is preferably F or higher.

The present ink composition can be suitably used for performing printing by an ink jet recording method using an ink jet recording device. That is, one suitable aspect of the present ink composition is an ultraviolet-curable ink jet ink composition. Any of known methods of the related art such as a method of jetting liquid droplets using vibration of a piezoelectric element (recording method using an ink jet head that forms ink droplets by mechanical deformation of an electrostrictive element) and a method using thermal energy can be used as the ink jet recording method.

A printed material can be produced by jetting the present ink composition to a base material serving as a recording medium using an ink jet recording device and irradiating the base material with active energy rays to cure the present ink composition. Examples of the printed material include an advertisement, a billboard, a guide board, and promotional item printing.

The present ink composition has excellent adhesiveness to various base materials serving as recording media and can be easily printed on a curved surface or an uneven surface of a base material having an irregular shape.

Examples of a material of the base material include resins commonly used for injection molding, for example, an acrylonitrile-butadiene-styrene (ABS) resin, an ABS-based polymer alloy such as a polyvinyl chloride/ABS resin, a polyamide/ABS resin, a polycarbonate/ABS resin, or a polybutylene terephthalate/ABS resin, an acrylonitrile-acryl rubber-styrene resin, an acrylonitrile-styrene resin, an acrylonitrile-ethylene rubber-styrene resin, a (meth)acrylic acid ester-styrene-based resin, a polycarbonate-based resin, an acrylic resin, a methacrylic resin, and a polypropylene-based resin.

Further, a film can also be used as the base material. Examples of the film include a thermoplastic resin film used for a food packaging material, and examples of the thermoplastic resin film include a polyethylene terephthalate (PET) film, a polystyrene film, a polyamide film, a polyacrylonitrile film, a polyolefin film such as a polyethylene film (a linear low-density polyethylene (LLDPE) film or a high-density polyethylene (HDPE) film) or a polypropylene film (a cast polypropylene (CPP) film or an oriented polypropylene (OPP) film), a polyvinyl alcohol film, and an ethylene-vinyl alcohol copolymer film. A film that has been subjected to a stretching treatment such as monoaxial stretching or biaxial stretching or a film that has been subjected to a flame treatment, a corona discharge treatment, or the like can also be used as the film.

### EXAMPLES

Hereinafter, the present invention will be described in detail based on examples and comparative examples, but the present invention is not limited such examples and the like.

The compounds used in the present examples and the like are described below.

### <Pigment>

· C1: Fastogen Blue TGR-J (cyan pigment, manufactured by DIC Corporation)
· M1: Fastogen Super Magenta RTSP (magenta pigment, manufactured by DIC Corporation)
· Y1: Ink Jet YELLOW 4GC (yellow pigment, manufactured by Clariant AG)
· K1: #960 Ext 795 (black pigment, manufactured by DIC Corporation)
· W1: TIPAQUE PF-690 (white pigment, titanium oxide, manufactured by Ishihara Sangyo Kaisha, Ltd.) <Pigment dispersant>
· Solsperse 32000 (manufactured by The Lubrizol Corporation)
· Solsperse 39000 (manufactured by The Lubrizol Corporation)
· EFKA PX4701 (manufactured by BASF SE)

### <Polymerizable compound>

· Miramer M200: hexanediol diacrylate (manufactured by Miwon Specialty Chemical Co., Ltd.)
· Miramer M213: neopentyl glycol dimethacrylate (manufactured by Miwon Specialty Chemical Co., Ltd.)
· V#200: cyclic trimethylolpropane formal acrylate (monomer A: Osaka Organic Chemical Industry Ltd.)
· Miramer M170: 2-(2-ethoxyethoxy)ethyl (meth)acrylate (monomer B: manufactured by Miwon Specialty Chemical Co., Ltd.)
· V-Cap: N-vinylcaprolactam (manufactured by Ashland Inc.)
· PO-A: phenoxyethyl acrylate (manufactured by Kyoeisha Chemical Co., Ltd.)

### <Polyfunctional polymerizable compound>

· CN965NS: polyester-based urethane acrylate (manufactured by Sartomer)
· EBECRYL 230: aliphatic urethane acrylate (manufactured by Daicel-Allnex Ltd., weight-average molecular weight of 5000)
· EBECRYL 7100: amino acrylate (manufactured by Daicel-Allnex Ltd.)

### <Non-reactive resin>

· UP-1000: acrylic polymer (manufactured by Toagosei Co., Ltd., weight-average molecular weight of 3000)
· UP-1080: acrylic polymer (manufactured by Toagosei Co., Ltd., weight-average molecular weight of 6000)

### <Photopolymerization initiator>

· Omnirad 819: phenylbis(2,4,6-trimethylbenzoyl)phosphine oxide (acylphosphine oxide-based; manufactured by IGM RESINS B.V.)
· SpeedCure DETX: 2,4-diethylthioxanthen-9-one (Rambson Japan Co., Ltd.)
· Omnirad TPO-L: ethyl(2,4,6-trimethylbenzoyl)-phenylphosphine oxide (acylphosphine oxide-based; manufactured by IGM RESINS B.V.)
· Esacure 1001M: 1-[4-(4-benzoylphenylsulfanyl)phenyl]-2-methyl-2-(4-methylphenylsulfonyl)propan-1-one (benzophenone-based; manufactured by IGM RESINS B.V.)
· TELALUX KCBp: benzoxazole derivative (manufactured by Clariant Japan K.K.)

### <Additive (surfactant)>

· KF-351A: polyether-modified silicone (manufactured by Shin-Etsu Chemical Co., Ltd.)
· KF-54: methylphenylpolysiloxane (manufactured by Shin-Etsu Chemical Co., Ltd.)

### <Polymerization inhibitor>

· NONFLEX Alba: 2,5-di-tert-butylhydroquinone (manufactured by Seiko Chemical Co., Ltd.)
· p-Methoxyphenol: (manufactured by Seiko Chemical Co., Ltd.)
· BHT: dibutylhydroxytoluene (manufactured by Seiko Chemical Co., Ltd.)

### <Other components>

· Tinopal OB-CO: 2,5-bis(5'-tert-butyl-2'-benzoxazolyl)thiophene (fluorescent brightening agent, manufactured by BASF SE)
· ADK STAB AO-80: bis[3-[3-(tert-butyl)-4-hydroxy-5-methylphenyl]propanoic acid]-2,4,8,10-tetraoxaspiro[5.5]undecane-3,9-diylbis(2-methylpropan-2,1-diyl) (antioxidant, manufactured by ADEKA Corporation)

### [Preparation example of pigment dispersion]

The pigments (C1, M1, Y1, K1, and W1), the pigment dispersants (Solsperse 32000, Solsperse 39000, EFKA PX4701), and PO-A were mixed to have the compositions listed in Tables 1 and 2, stirred by a stirrer for 1 hour, and treated in a bead mill for 2 hours, thereby obtaining pigment dispersions used in each example and each comparative example.

### Examples 1 to 10 and Comparative Examples 1 to 5

### 1. Preparation of ink composition

Each pigment dispersion and each component were added to a container, stirred, and mixed based on the blending ratios listed in Tables 1 and 2, thereby preparing ink compositions 1 to 15.

### 2. Evaluation of ink composition

### 2-1. Preparation of printed material

Each of the obtained ink compositions was added dropwise onto a base material (polyvinyl chloride or polycarbonate) and irradiated with ultraviolet light by causing the ink composition to pass under a UV-LED light source so that the ink was cured, thereby obtaining a printed material. The ink was jetted using an ink jet recording device having a piezo type ink jet head. The UV-LED light source for curing the ink composition was used to output ultraviolet light having a wavelength of 385 nm, the illuminance at the surface was fixed at 800 mV/cm², and the ink composition was exposed to ultraviolet light with an exposure amount of 1000 mJ/cm² while the transport speed was changed.

### 2-2. Stretch resistance

The obtained printed material (film thickness of the coating film obtained from the ink composition: 6 um) was allowed to stand at 0°C for 24 hours and stretched by 1% using a tensile tester (TENSILON, manufactured by Orientec Co., Ltd.). The stretched coating film was visually observed to evaluate the presence or absence of cracks.

### 2-3. Blocking resistance (tackiness)

A stainless steel petri dish (ϕ75 mm) was prepared in a test room at 25°C, and a 15 g weight was attached to a side surface portion inside the petri dish. Next, the stainless steel petri dish to which the weight was attached was fixed by hand in a state of being placed upright on the surface of the coating film such that the positional relationship between the weight and the surface of the coating film was as shown in Fig. 1. The hand was removed from the stainless steel petri dish, and the blocking resistance was evaluated based on the number of times the stainless steel petri dish swang in the lateral direction on the surface of the coating film until the petri dish stopped.

### 2-4. Pencil hardness

A pencil scratch test was performed using the obtained printed material (film thickness of the coating film obtained from the ink composition: 6 um) in conformity with JIS K 5600-5-4, and the pencil hardness was evaluated.

The evaluation results obtained above are listed in Tables 1 and 2. As shown in the results, it was found that the ink composition in which the content of the monomer A (V#200: cyclic trimethylolpropane formal acrylate) is in the range defined by the present invention with respect to the total amount of the ink composition and which contains the monomer B (Miramer M170: 2-(2-ethoxyethoxy)ethyl (meth)acrylate) and at least one polyfunctional polymerizable compound selected from urethane (meth)acrylate or amino (meth)acrylate has flexibility (stretch resistance) at a low temperature while maintaining the blocking resistance at room temperature. Particularly, when the ink composition contains amino (meth)acrylate (EBECRYL 7100), a coating film in which all the blocking resistance, the flexibility at a low temperature, and the hardness are excellent can be obtained even in a case where the content of the initiator in the ink composition was reduced.

Further, when the ink composition suitably contains 5% to 15% by mass of the monomer B with respect to the total amount of the ink composition, both the blocking resistance at room temperature and the flexibility (stretch resistance) at a low temperature can be achieved, and the hardness of the obtained coating film is also excellent.

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Ink composition number | | 1 | 2 | 3 | 4 | 5 | 6 | 7 | 8 | 9 | 10 |
| (Configuration) | (Details) | | | | | | | | | | |
| Dispersion | Pigment | C1(1.7) | C1(1.7) | C1(1.7) | C1(1.7) | M1 (3.4) | M1 (3.4) | M1 (3.4) | Y1 (2.2) | K1(1.8) | W1(15.5) |
| | Solsperse32000 | 0.8 | 0.7 | 0.8 | 0.8 | 1.5 | | 1.5 | | 1.5 | |
| | Solsperse39000 | | | | | | 2.0 | | | | |
| | EFKA PX4701 | | | | | | | | 2.2 | | 1.5 |
| | PO-A | 14.5 | 14.1 | 14.5 | 14.5 | 28.9 | 28.4 | 28.9 | 13.9 | 14.9 | 13.9 |
| Polymerizable compound | Miramer M200 | 2.4 | 1.8 | 1.9 | 2.4 | 1.9 | 2.3 | 2.3 | 2.4 | 2.4 | 2.4 |
| | Miramer M213 | 1.4 | 0.9 | 0.9 | 1.4 | 0.9 | 1.4 | 1.4 | 1.4 | 1.4 | 1.5 |
| | V#200 | 35.7 | 35.0 | 35.7 | 35.8 | 35.1 | 35.1 | 35.1 | 35.1 | 35.9 | 36.0 |
| | Miramer M170 | 13.2 | 12.8 | 13.2 | 12.2 | 11.6 | 10.7 | 9.8 | 12.7 | 12.5 | 12.6 |
| | V-CAP | 8.9 | 8.3 | 8.5 | 8.9 | 5.6 | 5.6 | 5.6 | 9.4 | 9.6 | 8.2 |
| | PO-A | 8.1 | 11.8 | 9.5 | 8.1 | | | | 8.3 | 6.9 | 1.1 |
| Polyfunctional polymerizable compound | CN965NS | 4.7 | 4.6 | | 4.7 | 2.8 | 2.8 | 2.8 | 3.8 | 3.8 | 2.9 |
| | EBECRYL230 | | | 4.7 | | | | | | | |
| | EBECRYL7100 | 2.7 | | 2.7 | 2.7 | 2.1 | 2.1 | 2.1 | 2.7 | 2.8 | 2.1 |
| Non-reactive resin | UP-1000 | | | | 0.9 | | | | | | |
| | UP-1080 | | | | | | | 0.9 | | | |
| Photopolymerization initiator | Omnirad819 | 2.7 | 5.0 | 2.7 | 2.7 | 2.7 | 2.7 | 2.7 | 2.7 | 2.8 | 2.8 |
| | SpeedCure DETX | 2.7 | 2.8 | 2.7 | 2.7 | 2.7 | 2.7 | 2.7 | 2.7 | 3.3 | |
| Additive | KF-351A | 0.2 | 0.2 | 0.2 | 0.2 | 0.2 | 0.2 | 0.2 | 0.2 | 0.2 | |
| | KF-54 | 0.2 | 0.2 | 0.2 | 0.2 | 0.4 | 0.4 | 0.4 | 0.2 | 0.2 | 0.1 |
| Polymerization inhibitor | NONFLEX Alba | 0.1 | 0.1 | 0.1 | 0.1 | 0.1 | 0.1 | 0.1 | | | |
| | p-Methoxyphenol | | | | | 0.1 | 0.1 | 0.1 | | | |
| | BHT | | | | | | | | 0.1 | | |
| Other components | Tinopal OB-CO | | | | | | | | | | 0.3 |
| | ADK STAB AO-80 | | | | | | | | | 0.1 | 0.1 |
| Total amount of constituent components | | 100 | 100 | 100 | 100 | 100 | 100 | 100 | 100 | 100 | 100 |
| Stretch characteristics at low temperature | | No cracks | No cracks | No cracks | No cracks | No cracks | No cracks | No cracks | No cracks | No cracks | No cracks |
| Blocking resistance (number of times) | | 8 | 9 | 8 | 8 | 8 | 9 | 9 | 9 | 9 | 9 |
| Pencil hardness | | H | F | H | H | F | H | H | H | F | F |

| | | | | | | | | | | | |
|---|---|---|---|---|---|---|---|---|---|---|---|
| * The numbers in the columns of each constituent component (and the numbers in the parentheses of the pigments) are in units of parts by mass. | | | | | | | | | | | |

**[Table 2]**

| | | Example 11 | Example 12 |
|---|---|---|---|
| Ink composition number | | 16 | 17 |
| (Configuration) | (Details) | | |
| Dispersion | Pigment | (W1)15.2 | |
| | EFKA PX4701 | 1.5 | |
| | PO-A | 13.64 | |
| Polymerizable compound | Miramer M200 | 4.22 | 2.50 |
| | Miramer M213 | | |
| | V#200 | 35 | 35.00 |
| | Miramer M170 | 7.75 | 10.00 |
| | V-CAP | 12 | 12.00 |
| | PO-A | | 22.96 |
| Polyfunctional polymerizable compound | CN965NS | 3.50 | 9.00 |
| | EBECRYL 230 | | |
| | EBECRYL 7100 | | |
| Non-reactive resin | UP-1000 | | |
| | UP-1080 | | |
| Photopolymerization initiator | Omnirad 819 | 3.50 | 2.00 |
| | SpeedCure DETX | | |
| | Omnirad TPO-L | 2.52 | 5.02 |
| | Esacure 1001M | 0.72 | 0.77 |
| Additive | KF-351A | | 0.20 |
| | KF-54 | 0.10 | 0.20 |
| Polymerization inhibitor | BHT | 0.10 | 0.10 |
| | TELALUX KCB p | 0.25 | 0.25 |
| Total amount of constituent components | | 100 | 100 |
| Stretch characteristics at low temperature | | No cracks | No cracks |
| Blocking resistance (number of times) | | 9 | 8 |
| Pencil hardness | | H | H |

| | | | |
|---|---|---|---|
| * The numbers in the columns of each constituent component (and the numbers in the parentheses of the pigments) are in units of parts by mass. | | | |

**[Table 3]**

| | | Comparative Example 1 | Comparative Example 2 | Comparative Example 3 | Comparative Example 4 | Comparative Example 5 |
|---|---|---|---|---|---|---|
| Ink composition number | | 11 | 12 | 13 | 14 | 15 |
| (Configuration) | (Details) | | | | | |
| Dispersion | Pigment | C1(1.7) | C1(1.7) | C1(1.7) | C1(1.7) | C1(1.7) |
| | Solsperse32000 | 0.7 | 0.7 | 0.7 | 0.7 | 0.7 |
| | Solsperse39000 | | | | | |
| | EFKA PX4701 | | | | | |
| | PO-A | 14.1 | 14.1 | 14.1 | 14.1 | 14.1 |
| Polymerizable compound | Miramer M200 | 2.8 | 2.8 | 2.8 | 2.8 | |
| | Miramer M213 | 1.8 | 1.8 | 1.8 | 1.8 | |
| | V#200 | 35.7 | 9.1 | 32.5 | 32.5 | 57.2 |
| | Miramer M170 | 9.2 | 11.9 | 27.5 | 1.8 | 2.8 |
| | V-CAP | 10.6 | 6.0 | 6.0 | 10.6 | 10.6 |
| | PO-A | 15.1 | 39.0 | | 21.1 | |
| Polyfunctional polymerizable compound | CN965NS | | 4.5 | 4.6 | 4.6 | 4.6 |
| | EBECRYL230 | | | | | |
| | EBECRYL7100 | | | | | |
| Non-reactive resin | UP-1000 | | | | | |
| | UP-1080 | | | | | |
| Photopolymerization initiator | Omnirad819 | 5.0 | 5.0 | 5.0 | 5.0 | 5.0 |
| | SpeedCure DETX | 2.8 | 2.8 | 2.8 | 2.8 | 2.8 |
| Additive | KF-351A | 0.2 | 0.2 | 0.2 | 0.2 | 0.2 |
| | KF-54 | 0.2 | 0.2 | 0.2 | 0.2 | 0.2 |
| Polymerization inhibitor | NONFLEX Alba | 0.1 | 0.1 | 0.1 | 0.1 | 0.1 |
| | p-Methoxyphenol | | | | | |
| | BHT | | | | | |
| Other components | Tinopal OB-CO | | | | | |
| | ADK STAB AC-80 | | | | | |
| Total amount of constituent components | | 100 | 100 | 100 | 100 | 100 |
| Stretch characteristics at low temperature | | Occurrence of cracks | No cracks | No cracks | Occurrence of cracks | Occurrence of cracks |
| Blocking resistance (number of times) | | 5 | 3 | 3 | 9 | 7 |
| Pencil hardness | | HB | HB | HB | F | HB |

| | | | | | | |
|---|---|---|---|---|---|---|
| * The numbers in the columns of each constituent component (and the numbers in the parentheses of the pigments) are in units of parts by mass. | | | | | | |

### Industrial Applicability

The active energy ray-curable ink composition of the present invention has flexibility (stretch resistance) at a low temperature while maintaining blocking resistance at room temperature, forms a printed material with excellent flexibility, and also has excellent durability against stacking of printed materials, and thus is useful for variation applications including printed materials, graphic fields such as billboards, signboards, display exhibition, card printing, and smart covers, interior parts for automobiles, home appliances, and membrane switches.

### Reference Signs List

- 1: STAINLESS STEEL PETRI DISH
- 2: WEIGHT
- 3: SURFACE OF COATING FILM

## Claims

1. An active energy ray-curable ink composition comprising:
35% to 50% by mass of a monomer A represented by General Formula (1) with respect to a total amount of the composition; 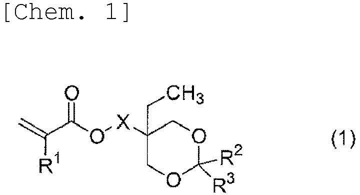
(in the formula, R¹, R², and R³ each independently represent a hydrogen atom or an alkyl group, and X represents a single bond or a divalent linking group)
a monomer B having a polymerizable unsaturated double bond and a structure represented by General Formula (2); and 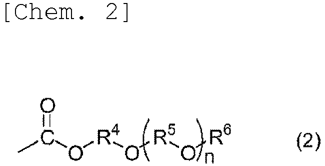
(in the formula, R⁴ represents an alkylene group having 1 or more carbon atoms, R⁵ represents an alkylene group having 1 or more carbon atoms, which may be the same as or different from R⁴, R⁶ represents a hydrogen atom or an alkyl group, and n represents an integer of 0 or greater)
a polyfunctional polymerizable compound selected from at least one of urethane (meth)acrylate or amino (meth)acrylate.

2. The active energy ray-curable ink composition according to claim 1,
wherein the monomer A is cyclic trimethylolpropane formal (meth)acrylate.

3. The active energy ray-curable ink composition according to claim 1 or 2,
wherein a content of the monomer B is in a range of 5% to 15% by mass with respect to the total amount of the composition.

4. The active energy ray-curable ink composition according to any one of claims 1 to 3,
wherein the monomer B is 2-(2-ethoxyethoxy)ethyl (meth)acrylate.

5. The active energy ray-curable ink composition according to any one of claims 1 to 4,
wherein the polyfunctional polymerizable compound has a molecular weight of 2000 to 20000.

6. The active energy ray-curable ink composition according to any one of claims 1 to 5,
wherein the active energy ray-curable ink composition contains urethane (meth)acrylate and amino (meth)acrylate as the polyfunctional polymerizable compound.

7. The active energy ray-curable ink composition according to any one of claims 1 to 6,
wherein a content of the polyfunctional polymerizable compound is in a range of 2% to 12% by mass with respect to the total amount of the composition.

8. The active energy ray-curable ink composition according to any one of claims 1 to 7,
wherein the active energy ray-curable ink composition has a pencil hardness of F or higher when cured.

9. The active energy ray-curable ink composition according to any one of claims 1 to 8,
wherein the active energy ray-curable ink composition is an ultraviolet-curable ink jet ink composition.

10. A method of producing a printed material, comprising:
a step of jetting the active energy ray-curable ink composition according to any one of claims 1 to 9 to a recording medium and irradiating the composition with active energy rays to cure the composition.
